# EUROPEAN PATENT APPLICATION

(11) **EP 1 793 439 A1**
(43) Date of publication of application: **06.06.2007**
(21) Application number: 05768512.5
(22) Date of filing: 03.08.2005
(51) Int. Cl.: H01M 8/04, H01M 8/00, H01M 8/06, H01M 8/10

(54) **FUEL CELL DEVICE AND MOBILE ELECTRONIC DEVICE USING THE SAME**

(30) Priority: 04.08.2004 JP 2004228741
(71) Applicant: NEC Corporation, Minato-ku Tokyo 108-8001 (JP)
(72) Inventor: KIYOTA, Atsushi, c/o NEC Corporation, Tokyo 1088001 (JP)
(74) Representative: Glawe, Delfs, Moll
(86) International application number: PCT/JP2005/014210
(87) International publication number: WO 2006/013892

(57) **Abstract**

Produced water W is collected from fuel cell 24 and supplied to produced water collection chamber 22. This collected produced water W and fuel F are supplied to mixing chamber 23 via flow rate adjusting nozzles 25, 26 controlled by control signals g and h. They are mixed at a mixture ratio in accordance with the amount of power consumed by mobile telephone 40 and supplied to fuel cell 24. Thus, produced water W is reused to produce a mixed fuel. Accordingly, when mobile telephone 40 using fuel cell 24 is kept in the clothing or in the bag of a user, there is no need for discharging produced water W to the outside. Moreover, since the mixed fuel is produced at the mixture ratio in accordance with the amount of power consumed by mobile telephone 40, with the result that the amount of power generated by fuel cell 24 is adjusted, no unnecessary power is generated and heating can be suppressed even when the functions used in mobile telephone 40 are changed. Thus, it is possible to improve the efficiency and safety of the fuel cell device and user-friendliness of a mobile electronic device that uses the fuel cell device.

## Description

### TECHNICAL FIELD

The present invention relates to a fuel cell device and a mobile electronic device with the same, for example, a fuel cell device suitable for use in a mobile electronic device, such as a mobile telephone, a notebook type personal computer or the like, which is carried by a user in the clothing or in the bag, and a mobile electronic device with it.

### BACKGROUND ART

Secondary cells such as a lithium ion cell are often used in mobile electronic devices such as a mobile telephone, a notebook type personal computer and the like, as a power supply. In recent years, however, the increase in power consumption is widespread due to higher functionality, so that uninterrupted run times tend to be shorter, i.e., on the order of several hours. On the other hand, users strongly wish to continuously use a mobile telephone, a notebook type personal computer or the like for a long time. Thus, expectations have risen for fuel cells which can provide a continuous run time that will be approximately ten times longer than that of lithium ion cells as a power supply source which will be substitute for secondary cells. Since fuel cells used in mobile electronic devices are required to be smaller in size and lighter in weight, they cannot be equipped with a hydrogen tank or the like. For this reason, a system which employs liquid methanol as a fuel, is the most common type of fuel cell system. If a mobile telephone or a notebook type personal computer which can operate on methanol is realized, the operation of the device can be continued just by exchanging a methanol cartridge without the need for recharging a secondary cell.

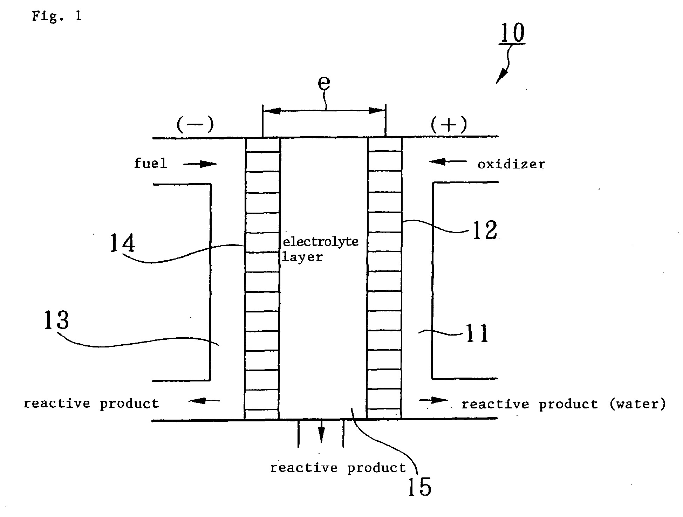

Fig. 1 is a drawing illustrating the basic configuration of this type of conventional fuel cell.

This fuel cell 10, as illustrated in Fig. 1, comprises positive side gas chamber 11, positive electrode 12, negative side gas chamber 13, negative electrode 14, and electrolytic layer 15 sandwiched between positive electrode 12 and negative electrode 14.

In fuel cell 10, a positive active material (oxidizer such as air, oxygen, or the like) is introduced into positive side gas chamber 11, while an applied negative active material (for example, a fuel comprised of methanol or the like) is introduced into negative side gas chamber 13. Then, electromotive force e is generated between positive electrode 12 and negative electrode 14 while reactive products are discharged from positive side gas chamber 14, negative-pole gas chamber 13 and electrolytic layer 15. In this event, water is produced as the reactive product from positive side gas chamber 11.

In regard to fuel cells as described above, technologies have been conventionally proposed, for example, as described in the following documents.

A fuel cell device described in JP-A-2003-331885 comprises a plurality of types of tanks which store fuels in different concentrations and tanks are switched in accordance with the required output level. Specifically, a low concentration fuel is supplied to the fuel cell for low power, while a high concentration fuel is supplied to the fuel cell for high power, thus efficiently generating electric power to meet low power to high power needs.

In an apparatus for supplying liquid raw fuel that is to be reformed which is described in JP-A-H8(96)-91804, a liquid raw fuel that is to be reformed, which consists of methanol and water previously adjusted according to a predetermined ratio and which is supplied to a methanol reformer of fuel cell, is stored in a pool for liquid raw fuel that is to be reformed. Thus, the liquid raw fuel that is to be reformed will not freeze even at cold districts, so that a fuel cell system can be stably operated. Also, since water produced in the fuel cell is collected and supplied to the pool for liquid raw fuel that is to be reformed, no water need be stored for adjusting the liquid raw fuel that is to be reformed. Consequently, the fuel cell system is reduced in size and weight. Further, since a stable mixing ratio of methanol to water is ensured in the liquid raw fuel that is to be reformed, a stable amount of hydrogen gas can be produced from the methanol reformer, resulting in a stabilized amount of generated power.

However, the conventional fuel cells described above have the following problems.

Specifically, because of principle according to which fuel cells operate, in the fuel cell illustrated in Fig. 1, the production of water cannot be avoided when an electromotive force e is generated. Particularly, when used in mobile electronic devices, it is not easy to manage the produced water, for example, to expel it to the outside, because the mobile electronic devices are assumed to be kept in the clothing or in the bag by users. Also, in the actual use of devices that are equipped with fuel cells, not limited to mobile electronic devices, since power consumed by a load varies depending on the functions that are used, the required amount of power varies. In this event, when the amount of power that is generated from a fuel cell is greater than the power that is needed, the excess power is not completely consumed and the excess power causes the fuel cell to generate heat, possibly leading to lower efficiency and malfunctions in the device. On the other hand, a shortage of power would prevent a device from operating. Accordingly, in order to efficiency use power, the amount of power generated by a fuel cell must be adjusted in accordance with the amount of power that will be consumed by a load. Also, for preventing parts such as ICs and the like within a mobile electronic device from generating heat, countermeasures are often taken using a thermally conductive sheet. However, such an approach requires space within the device, thus resulting in a problem of difficulties in reducing the size.

On the other hand, in the fuel cell device described in JP-A-2003-331885, while the tanks are switched in accordance with the required output level, the fuel concentration may not always be appropriate to the required output level. Also, since water that is produced is not collected, this fuel cell device has a problem similar to the fuel cell of Fig. 1, as described above.

In the apparatus for supplying liquid raw fuel that is to be reformed which is described in JP-A-H8(96)-91804, water produced by the fuel cell is collected and supplied to the pool for liquid raw fuel that is to be reformed, but this is just intended to reduce the fuel cell system in size and weight by avoiding the storage of water through adjusting the liquid raw fuel that is to be reformed.

### DISCLOSURE OF THE INVENTION

In view of the circumstance described above, it is an object of the present invention to provide a fuel cell device that is different in construction from JP-A-2003-331885 and JP-A-H8(96)-91804, and which is configured to collect water that is produced from a fuel cell, and to prevent parts such as ICs and the like from generating heat, and which is readily available for mobile electronic devices.

To solve the above problem, a fuel cell device of the present invention is characterized by comprising a fuel cell for generating power by a reduction reaction of a fuel to supply power to a load, and generated power adjusting means for adjusting the power generated by the fuel cell by collecting water produced by the reduction reaction of the fuel from the fuel cell, mixing the produced water with the fuel at a mixture ratio in accordance with the amount of power consumed by the load, and supplying the mixture to the fuel cell.

The fuel cell device configured as described above can be readily used in a mobile electronic device which is kept in the clothing or in the bag of the user because the water that is produced need not be discharged to the outside. Also, unnecessary power will not be generated even then the amount of the power consumed by the load changes, thus making it possible to limit heat generation and to improve efficiency.

The generated power adjusting means may comprise a fuel storage chamber for storing the fuel to be supplied to the fuel cell, a produced water collection chamber for collecting the water that is produced from the fuel cell, and a mixture ratio adjusting means for mixing the fuel stored in the fuel storage chamber with the water that is produced and that is collected and supplied to the produced water collection chamber at a mixture ratio in accordance with the degree of power that is consumed by the load to supply the mixture to the fuel cell.

The mixture ratio adjusting means may comprise a mixing chamber for mixing the fuel with the produced water, a fuel flow rate adjusting unit for supplying the fuel stored in the fuel storage chamber into the mixing chamber at a flow rate proportional to the degree of power consumed by the load, and a produced water flow rate adjusting unit for supplying the produced water, collected in the produced water collection chamber, into the mixing chamber at a flow rate inversely proportional to the degree of power consumed by the load.

The fuel cell device may comprise a collection conduit provided for collecting the produced water from the fuel cell and for supplying it to the produced water collection chamber. In this event, the produced water can be efficiently collected. In addition, the collection conduit may be provided to be in contact with the periphery of the fuel cell. In this event, even if the amount of power that is consumed changes from a large amount to a small amount, the water produced from the fuel cell flows into the collection conduit to cool the fuel cell, thus making it possible to limit heat generation and achieve a high efficiency.

A mobile electronic device of the present invention is equipped with any of the fuel cell devices in the configurations described above.

Further, a mobile electronic device of the present invention may comprise the fuel cell device configured as described above equipped therein, and a circuit board having a heat generating part mounted thereon, wherein the collection conduit may be installed so as to be in contact with the heat generating part mounted on the circuit board. The water produced from the fuel cell flows into the collection conduit to cool the heat generating part, thereby making it possible to limit heat generation and to facilitate a reduction in the size of the mobile electronic device.

### BRIEF DESCRIPTION OF THE DRAWINGS

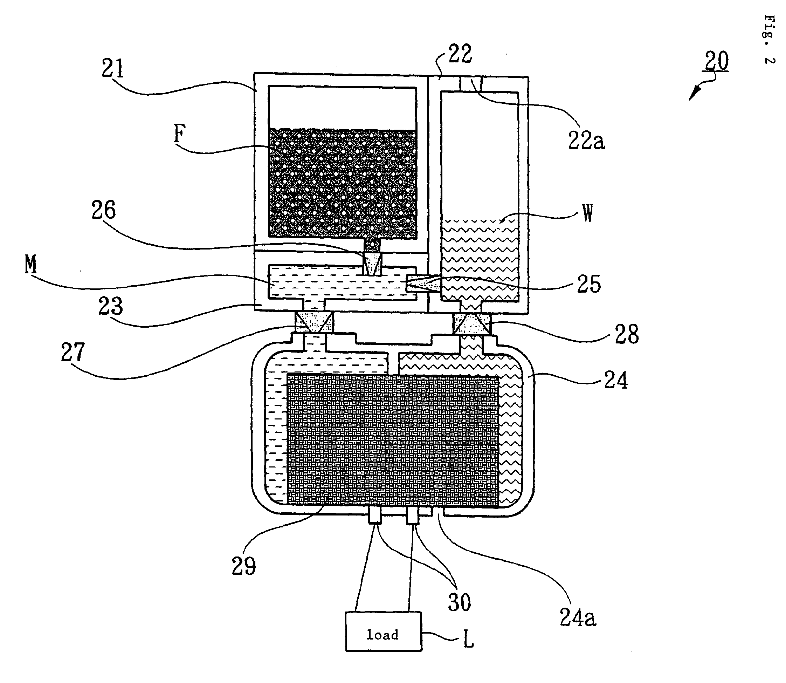

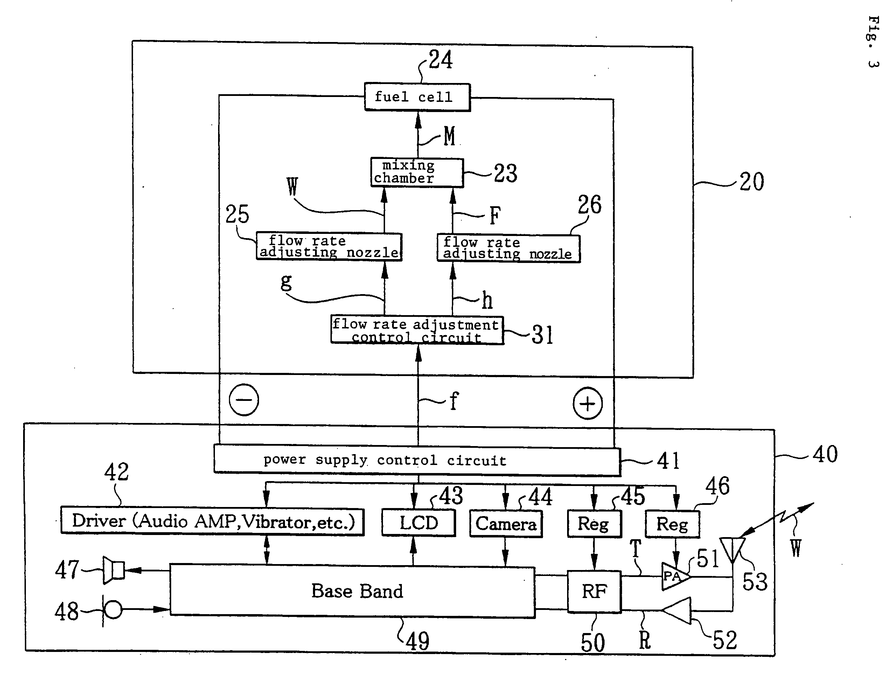

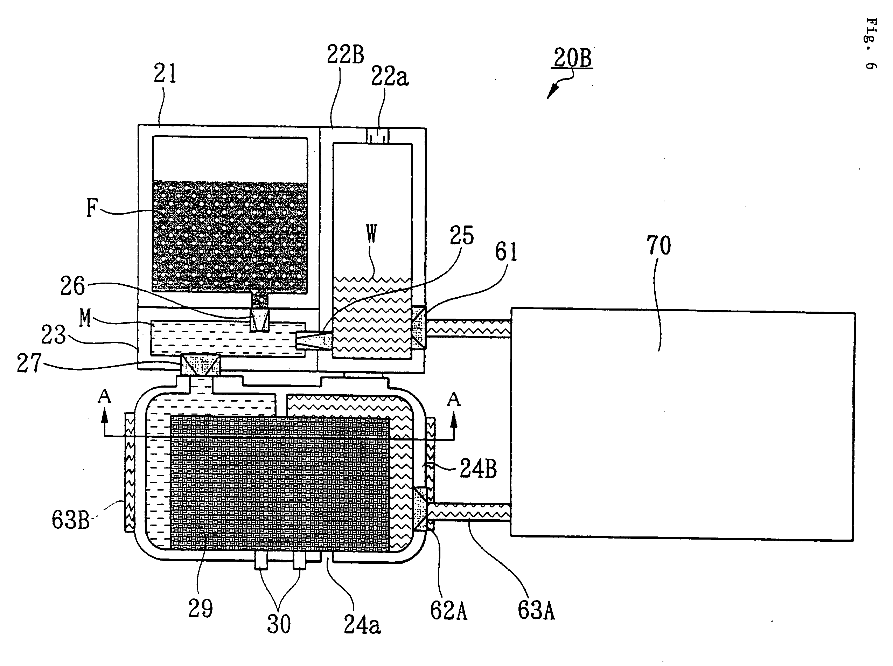

[Fig. 1]
   It is a drawing illustrating the basic configuration of a conventional fuel cell.
[Fig. 2]
   It is a drawing illustrating the configuration of a fuel cell device according to a first embodiment of the present invention.
[Fig. 3]
   It is a block diagram illustrating an exemplary electric configuration of a mobile electronic device which is equipped with the fuel cell device illustrated in Fig. 2.
[Fig. 4]
   It is a flow chart for describing the operation of the mobile telephone illustrated in Fig. 3.
[Fig. 5]
   It is a drawing illustrating the configuration of a fuel cell device according to a second embodiment of the present invention.
[Fig. 6]
   It is a drawing illustrating the configuration of a fuel cell device according to a third embodiment of the present invention.
[Fig. 7]
   It is a cross-sectional view taken along line A-A in Fig. 6.
[Fig. 8]
   It is a drawing illustrating an example of a fuel supply cartridge.

### BEST MODE FOR CARRYING OUT THE INVENTION

Next, embodiments of the present invention will be described with reference to the drawings.

### [First Embodiment]

A fuel cell device of the present invention is configured to collect produced water from a fuel cell and to supply it to a produced water collection chamber, mix the collected produced water with a fuel in a mixture ratio according to the degree of power consumed by a mobile electronic device, supply the mixture to the fuel cell to adjust the power generated by the fuel cell, and cool heated parts of the mobile electronic device using the produced water.

Fig. 2 is a drawing illustrating a configuration of a main portion of fuel cell device 20 according to a first embodiment of the present invention. As illustrated in Fig. 2, fuel cell device 20 of this embodiment comprises fuel storage chamber 21, produced water collection chamber 22, mixing chamber 23, fuel cell 24, flow rate adjusting nozzles 25, 26, supply nozzle 27, and collection nozzle 28. Fuel storage chamber 21 stores fuel (for example, methanol) F to be supplied to fuel cell 24. Produced water collection chamber 22 collects produced water W generated through reduction reaction of fuel F from fuel cell 24. Also, produced water collection chamber 22 is provided with water supply port 22a for supplying water at the start of initial use. Flow rate adjusting nozzles 25, 26 have a function for controlling the flow rate of a liquid based on control signals g, h (see Fig. 3). Then, flow rate adjusting nozzle 25 supplies collected produced water W in produced water collection chamber 22 to mixing chamber 23 at a flow rate inversely proportional to the amount of power consumed by load L connected to fuel cell 24. "Load" refers to a device which consumes power, and particularly in this embodiment, refers to a mobile electronic device such as mobile telephone 40 (see Fig. 3), later described.

Flow rate adjusting nozzle 26 supplies fuel F stored in fuel storage chamber 21 into mixing chamber 23 at a flow rate proportional to the amount of power consumed by load L. Mixing chamber 23 mixes produced water W supplied thereinto through flow rate adjusting nozzle 25 with fuel F supplied thereinto through flow rate adjusting nozzle 26 to make fuel mixture M.

Supply nozzle 27 comprises a one-way nozzle (check valve) for supplying fuel mixture M within mixing chamber 23 to fuel cell 24. Fuel cell 24 has air intake port 24a, power generation cell 29, and electrodes 30, and causes reduction reaction of fuel F included in fuel mixture M to generate power which is supplied to load L. The amount of power that is generated by fuel cell 24 is adjusted in accordance with the concentration of fuel mixture M. Specifically, when fuel mixture M has a high concentration, high power is produced due to increased reactions within power generation cell 29, whereas when fuel mixture M has a low concentration, the reactions hardly take place, resulting in the generation of a low amount of power. Collection nozzle 28 comprises a one-way nozzle and supplies produced water W from fuel cell 24 to produced water collection chamber 22.

Fig. 3 is a block diagram illustrating an exemplary electric configuration of a mobile electronic device which is equipped with fuel cell device 20 illustrated in Fig. 2. This mobile electronic device is mobile telephone 40 which comprises power supply control circuit 41, driver 42, display unit 43, camera unit (Camera) 44, regulators (Reg) 45, 46, microphone 47, speaker 48, baseband unit (Base Band) 49, transmit-receive unit (RF) 50, power amplifier (PA) 51, buffer 52, and antenna 53, as illustrated in Fig. 3. Fuel cell device 20 also has flow rate adjustment control circuit 31 in addition to the respective components shown in Fig. 2.

Driver 42 comprises a driving circuit for driving an audio amplifier (Audio AMP) for driving speaker 48, a vibrator, not shown, and the like. Display unit 43 comprises, for example, a liquid crystal display (LCD) or the like for displaying a variety of information. Camera unit 44 comprises, for example, a CCD camera or the like for capturing an image near mobile telephone 40. Regulators 45, 46 each comprise, for example, a DC/DC converter or the like for converting a supply voltage from power supply control circuit 41 to a voltage of a predetermined value. Then, regulator 45 supplies the converted voltage to transmit-receive unit 50, while regulator 46 supplies the converted voltage to power amplifier 51.

Microphone 47 captures a voice of a user during a telephone call. Speaker 48 generates an incoming call sound to audibly notify the user of an incoming call, and also emits voices during a telephone call. Baseband unit 49 has, for example, an audio signal compress/decompress circuit, a pre-emphasis/de-emphasis circuit for compensating for attenuation of the treble, and the like, and baseband unit 49 performs a variety of signal processing operations for radio transmission. Transmit-receive unit 50 performs transmission/reception processing for radio signals through buffers 51, 52 and antenna 53. Power amplifier 51 transmits transmit signal T from transmit-receive unit 50 through antenna 53 as a transmit radiowave. Buffer 52 is applied with a radio signal in the form of radiowave W received by antenna 53 with a high input impedance, and sends the radio signal to transmit-receive unit 50 as received signal R with a low output impedance. Antenna 53 transmits/receives radiowave W to/from a radio base station, not shown.

Power supply control circuit 41 supplies, for example, a supply voltage from fuel cell 24 to driver 42, display unit 43, camera unit 44, and regulators 45, 46, and detects the overall power consumed by these components to send control signal f, corresponding to the power consumption, to flow rate adjustment control circuit 31. Flow rate adjustment control circuit 31 controls flow rate adjusting nozzles 25, 26 based on control signal f from power supply control circuit 41.

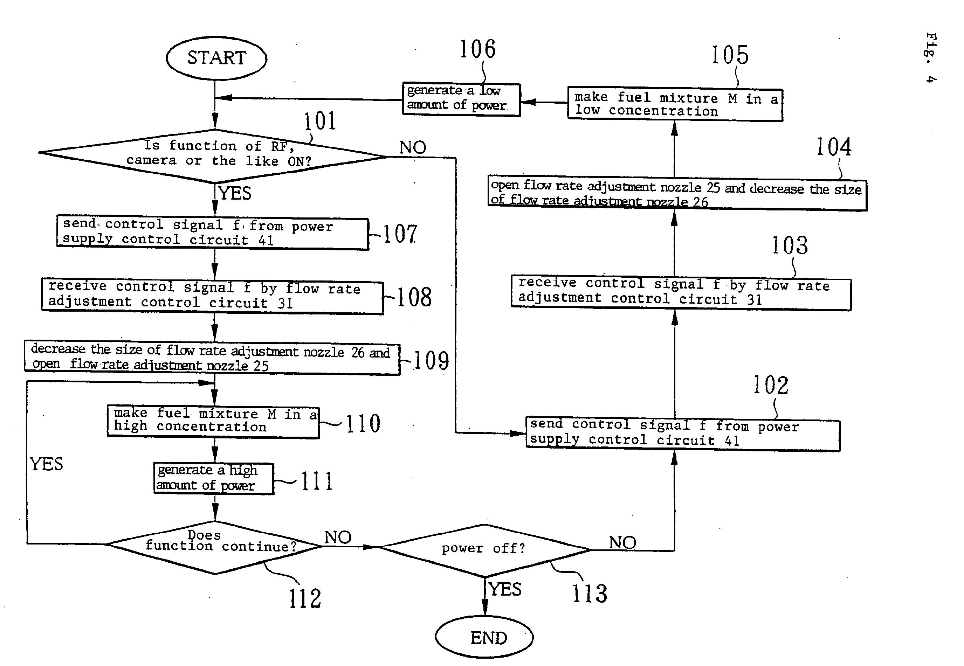

Fig. 4 is a flow chart for describing the operation of mobile telephone 40 illustrated in Fig. 4. The operation of mobile telephone 40 will be described with reference to Fig. 4.

In mobile telephone 40, water W produced through the reduction reaction of fuel F is collected from fuel cell 24, and produced water W is mixed with fuel F at a mixture ratio in accordance with the degree of a consumption current of mobile telephone 40, such that the mixture is supplied to fuel cell 24 to adjust the power generated by fuel cell 24.

First, to make the operation run smoothly at the start of initial use, an appropriate amount of water is previously supplied from water supply port 22a to produced water collection chamber 22. Fuel storage chamber 21 is supplied with methanol as fuel F. Subsequently, flow rate adjusting nozzle 26 is driven and mixing chamber 23 is supplied with fuel F and with the water in produced water collection chamber 22, which are agitated to produce fuel mixture M. Then, fuel mixture M is supplied to fuel cell 24 through supply nozzle 27, thereby starting initial power generation. After mobile telephone 40 is powered on, flow rate adjusting nozzles 25, 26 actuate in accordance with the amount of power consumed by mobile telephone 40.

At step 101, a small amount of power is consumed in a standby state when no function is active in camera unit 44 and the like. In this event, at steps 102, 103, power supply control circuit 41 transmits control signal f which is received by flow rate adjustment control circuit 31. At step 104, flow rate adjusting nozzle 25 associated with produced water collection chamber 22 is opened in response to control signal g from flow rate adjustment control circuit 31, while the size of flow rate adjusting nozzle 26 associated with fuel storage chamber 21 is decreased in response to control signal h from flow rate adjustment control circuit 31. In this way, fuel mixture M in low concentrations is produced at step 105. At step 106, fuel cell 24 generates a low amount of power that corresponds to the standby state due to low concentrations of fuel mixture M.

Subsequently, when camera unit 44, transmit-receive unit 50 or the like, for example, is to be used at step 101, a higher amount of power is required as compared with the standby state. In this event, control signal f is sent from power supply control circuit 41 for generating sufficient power to operate camera unit 44, transmit-receive unit 50 or the like at step 107, 108, and is received by flow rate adjustment control circuit 31. Then, flow rate adjusting nozzles 25, 26 are adjusted in response to control signals g, h from flow rate adjustment control circuit 31 at step 109 such that fuel mixture M has a fuel concentration required to operate camera unit 44, transmit-receive unit 50 or the like. Specifically, the size of flow rate adjusting nozzle 25 is decreased, while flow rate adjusting nozzle 26 is opened. Then, more fuel F is supplied to mixing chamber 23. In this way, fuel mixture M in higher concentrations is produced and supplied to fuel cell 24 at step 110. At step 111, fuel cell 24 generates a high amount of power, that is required to operate camera unit 44, transmit-receive unit 50 or the like, which is then supplied to mobile telephone 40.

In this event, in fuel cell 24, the amount of fuel mixture M that is supplied is reduced within power generation cell 29 to produce positive ions (hydrogen ions H+) which react with oxygen within the air from air intake port 24a to produce water (produced water W). The generated power is drawn out from electrodes 30. Produced water W in turn is collected and supplied to generated water collection chamber 22 through collection nozzle 28, and is reused for adjusting the concentration of fuel mixture M. Then, if use of the function continues in camera unit 44, transmit-receive unit 50 or the like at step 112, the flow returns to step 110 to repeat the production of fuel mixture M in high concentrations and the generation of high amount of power (step 111). On the other hand, when the function is stopped in camera unit 44, transmit-receive unit 50 or the like at step 112, operation is terminated as mobile telephone 40 is powered off at step 113. However, when power remains on at step 113, the flow proceeds to step 102 to repeat steps 102 - 106, so that the low-power standby state continues.

As described above, in the first embodiment, produced water W from fuel cell 24 is collected and supplied to produced water collection chamber 22. This collected water W and fuel F are supplied to mixing chamber 23 through flow rate adjusting nozzles 25, 26, and mixed at a mixture ratio in accordance with the amount of power consumed by mobile telephone 40 in order to make fuel mixture M, and fuel mixture M is supplied fuel cell 24. In this way, since produced water W is reused for making fuel mixture M, produced water W need not be discharged to the outside, so that the fuel cell device is readily used in mobile telephone 40 which is kept in the clothing or in the bag of the user. Also, since the amount of power generated by fuel cell 24 is adjusted by using fuel mixture M which is mixed at a mixture ratio in accordance with the amount of power consumed by mobile telephone 40, unnecessary power will not be generated, resulting in limited heat generation and increased efficiency, even if different functions are used in mobile telephone 40.

### [Second Embodiment]

In the first embodiment described above, since produced water W from fuel cell 24 is supplied to produced water collection chamber 22 only through collection nozzle 28, the collection may be inefficient. In this event, a problem arises in that water accumulates little by little in power generation cell 29 which decreases the efficiency of power generation. Accordingly, a second embodiment described below solves this problem.

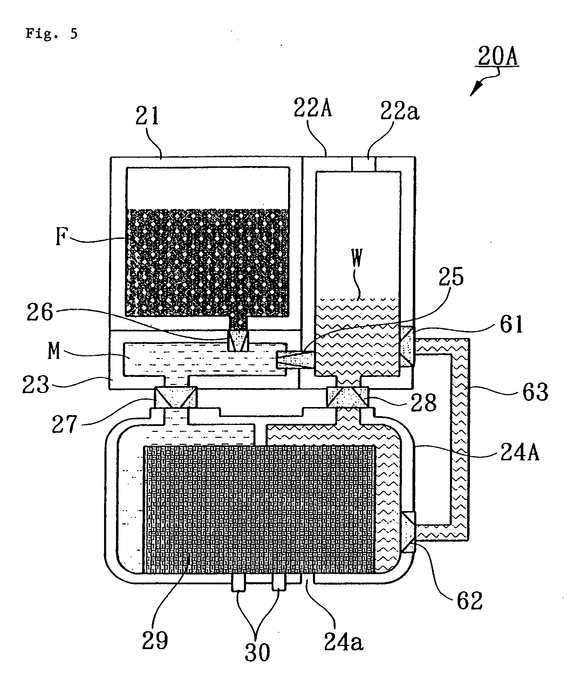

Fig. 5 is a drawing illustrating a configuration of the main portion of a fuel cell device according to the second embodiment of the present invention. Components similar to those in the first embodiment are designated common reference numerals.

As illustrated in Fig. 5, fuel cell device 20A of this embodiment comprises produced water collection chamber 22A and fuel cell 24A in a different configuration from produced water collection chamber 22 and fuel cell 24 in Fig. 2, which are provided instead of produced water collection chamber 22 and fuel cell 24 in Fig. 2, and additionally comprises collection conduit 63. Produced water collection chamber 22A is provided with collection nozzle 61 which is comprised of a check valve and the like, while fuel cell 24A is provided with collection nozzle 62 which is comprised of a check valve and the like. Then, produced water collection chamber 22A and fuel cell 24A are connected through collection nozzle 61, collection conduit 63, and collection nozzle 62. Collection conduit 63 is provided for collecting produced water W from fuel cell 24 and supplying it to produced water collection chamber 22A. Since the rest of the configuration is similar to that illustrated in Fig. 2, a description thereon is omitted.

In this fuel cell device 20A, produced water W from fuel cell 24 is collected and supplied to produced water collection chamber 22A not only through collection nozzle 28 but also through collection nozzle 61, collection conduit 63, and collection nozzle 62, so that produced water W is efficiently collected.

### [Third Embodiment]

When a heat generating part, for example, regulators 45, 46, power amplifier 51 (see Fig. 3) and the like in the first embodiment, exists within a mobile electronic device such as mobile telephone 40, countermeasures which uses a thermally conductive sheet or the like are conventionally taken However, as described above, such countermeasures may take up space within the device and therefore may cause difficulty in reducing the size of the mobile electronic device.

Also, in the first and second embodiments, when the amount of power consumed by mobile telephone 40 changes from a large amount to a small amount of power, fuel mixture M which already exists in mixing chamber 23 at that time has a high concentration. In other words, there is a certain degree of time lag until the amount of generated power is reduced after a low concentration of fuel mixture M has been supplied from mixing chamber 23. Thus, a problem is that an instance exists, at which a large amount of power is generated from fuel cell 24 in spite of a small load current, thus causing heat to generate which, in this event, reduces the efficiency.

Accordingly, a third embodiment, described below, solves these problems.

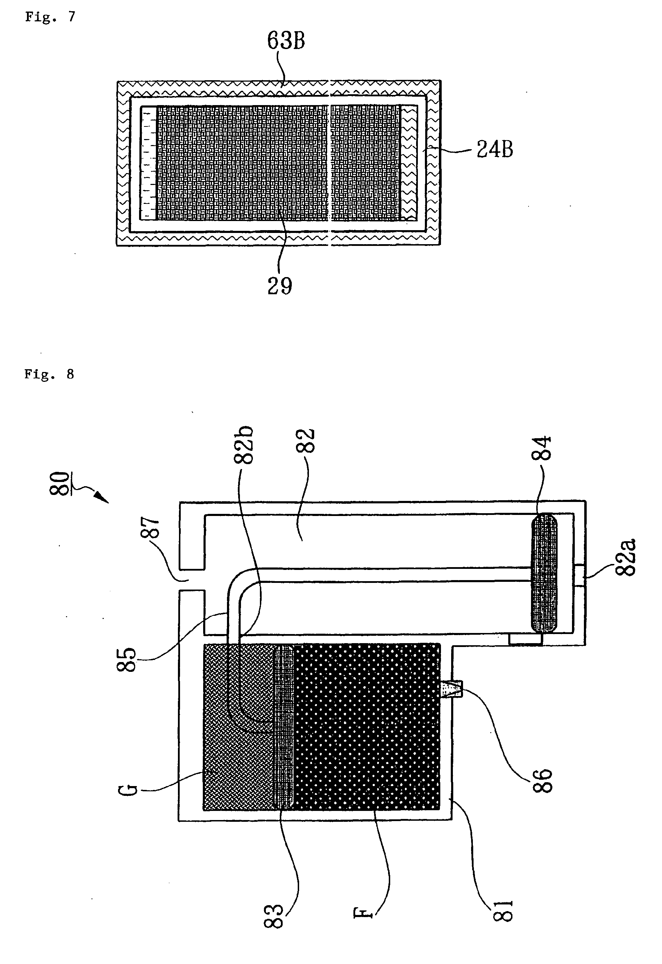

Fig. 6 is a diagram illustrating a configuration of a main portion of a fuel cell device according to the third embodiment of the present invention, and Fig. 7 is a cross-sectional view taken along line A-A in Fig. 6. Components similar to those in the first and second embodiments are designated common reference numerals.

As illustrated in Fig. 6, fuel cell device 20B of this embodiment comprises produced water collection chamber 22B, fuel cell 24B, and collection conduit 63A in a different configuration from produced water collection chamber 22A, fuel cell 24A, and collection conduit 63 in Fig. 5, which are provided instead of produced water collection chamber 22A, fuel cell 24A, and collection conduit 63 in Fig. 5, and omits collection nozzle 28. In produced water collection chamber 22B, a connection port to collection nozzle 28 is removed. In fuel cell 24B, a connection port to collection nozzle 28 is removed, and collection nozzle 62A is provided. Also, as illustrated in Fig. 7, collection conduit 63B is provided on the periphery of fuel cell 24B so as to be in contact with the periphery.

Produced water W from fuel cell 24B flows into collection conduit 63B through collection nozzle 62A. Also, collection conduit 63B is connected to collection conduit 63A through collection nozzle 62A to collect produced water W from fuel cell 24B and to supply it to produced water collection chamber 22B. Further, though not shown, collection conduit 63A is formed, for example, in a meandering pattern, such that heat generating parts mounted on circuit board 70 are in contact with collection conduit 63A. Heat generating parts are mounted on circuit board 70, which is provided within the mobile electronic device, for example, regulators 45, 46, power amplifier 51 and the like shown in Fig. 3. Since the rest of the configuration is similar to that illustrated in Fig. 5, a description thereon is omitted.

In this fuel cell device 20B, produced water W flowing into collection conduit 63B cools fuel cell 24B. Therefore, when the amount of power consumed by a mobile electronic device changes from a large amount to a small amount of power, fuel cell 24B is also cooled down to limit the heat generation, thus increasing efficiency. Also, since collection conduit 63A, through which produced water W is collected and supplied to produced water collection chamber 22B, is in contact with heat generating parts mounted on circuit board 70, these heat generating parts are cooled down to limit heat generation and to facilitate a reduction in the size of the mobile electronic device.

While embodiments of the present invention have been described in detail with reference to the drawings, specific configurations of the present invention are not limited to these embodiments, but are included in the present invention without departing from the spirit of the invention, even though there may be changes or the like in the design.

Fuel F is not limited to methanol, but any fuel, such as hydrogen and ethanol, may be used as long as it readily forms protons (positive ions) through reduction reaction.

Produced water W from fuel cell 24 shown in Fig. 2 may be mechanically collected using a pump or the like, or may be collected using the pressure of a gas which has been introduced into fuel cell 24.

Produced water W and fuel F supplied from flow rate adjusting nozzles 25, 26 are agitated in mixing chamber 23 to produce fuel mixture M which is then supplied to fuel cell 24 through supply nozzle 27. In this event, the concentration is preferably constant. For this reason, mixing chamber 23 may be provided with a mixing mechanism such as a rotor.

Fuel storage chamber 21 and produced water collection chamber 22 shown in Fig. 2 may be configured to be removable. When fuel storage chamber 21 and produced water collection chamber 22 are integrated with mobile telephone 40, fuel storage chamber 21 must be provided with a fuel supply port.

Also, instead of fuel storage chamber 21 and produced water collection chamber 22 in Fig. 2, fuel supply cartridge 80 may be used, for example, as illustrated in Fig. 8. This fuel supply cartridge 80 comprises fuel storage chamber 81, produced water collection chamber 82, pistons 83, 84, coupling rod 85, and supply nozzle 86. Produced water collection chamber 82 is provided with atmosphere opening port 87. Fuel storage chamber 81 is filled with gas G, for example, air or the like above piston 83, and filled with fuel F below piston 83. Coupling rod 85, which couples pistons 83, 84, is flexible but not telescopic, and has a degree of rigidity which permits coupling rod 85 to advance and retract between fuel storage chamber 81 and produced water collection chamber 82 through throughhole 82b. In this fuel supply cartridge 80, as fuel F is consumed, the amount of fuel F decreases within fuel storage chamber 81, causing piston 83 to move down and piston 84 to move up due to the pressure of gas G. In this way, the inner pressure of fuel cell 24 is reduced to collect produced water W and to supply it to produced water collection chamber 82.

The present invention is not limited to mobile telephone 40, but can be generally applied to mobile electronic devices to meet user requirements that such devices be able to run continuously for a longer period, for example, a notebook type personal computer, an MD (mini-disk) player, a portable video camera, and the like.

## Claims

1. A fuel cell device comprising:
a fuel cell for generating power by reduction reaction of a fuel to supply the power to a load; and
generated power adjusting means for adjusting the power generated by said fuel cell by collecting water produced through the reduction reaction of the fuel from said fuel cell, mixing the produced water with the fuel at a mixture ratio in accordance with an amount of power consumed by the load, and supplying the mixture to said fuel cell.

2. The fuel cell device according to claim 1, wherein said generated power adjusting means comprises:
a fuel storage chamber for storing the fuel to be supplied to said fuel cell;
a produced water collection chamber for collecting the produced water from said fuel cell; and
mixture ratio adjusting means for mixing the fuel stored in said fuel storage chamber with the produced water collected and supplied to said produced water collection chamber at a mixture ratio in accordance with the amount of power consumed by the load to supply the mixture to said fuel cell.

3. The fuel cell device according to claim 2, wherein said mixture ratio adjusting means comprises:
a mixing chamber for mixing the fuel with the produced water;
a fuel flow rate adjusting unit for supplying the fuel stored in said fuel storage chamber into said mixing chamber at a flow rate proportional to the amount of the power consumed by the load; and
a produced water flow rate adjusting unit for supplying the produced water, which is collected and supplied to said produced water collection chamber, to said mixing chamber at a flow rate inversely proportional to the amount of power consumed by the load.

4. The fuel cell device according to claim 2 or 3, comprising a collection conduit for collecting the produced water from said fuel cell and for supplying it to said produced water collection chamber.

5. The fuel cell device according to claim 4, wherein said collection conduit is provided to be in contact with the periphery of said fuel cell.

6. A mobile electronic device equipped with the fuel cell device according to any one of claims 1 to 5.

7. A mobile electronic device comprising:
the fuel cell device according to claim 4 or 5 equipped therein; and
a circuit board having a heat generating part mounted thereon,
wherein said collection conduit is installed so as to be in contact with the heat generating part mounted on said circuit board.
